# EUROPEAN PATENT APPLICATION

(11) **EP 4 116 480 A1**
(43) Date of publication of application: **11.01.2023**
(21) Application number: 21764994.6
(22) Date of filing: 02.03.2021
(51) Int. Cl.: D06F 39/04, D06F 58/26, D06F 58/40, D06F 34/00

(54) **CLOTHING MANAGEMENT APPARATUS**

(30) Priority: 02.03.2020 KR 20200025804
(71) Applicant: LG Electronics, Inc., Yeongdeungpo-gu Seoul 07336 (KR)
(72) Inventor: KIM, Woore, Seoul 08592 (KR); HAN, Injae, Seoul 08592 (KR); HONG, Sangwook, Seoul 08592 (KR)
(74) Representative: Ter Meer Steinmeister & Partner
(86) International application number: PCT/KR2021/002577
(87) International publication number: WO 2021/177707

(57) **Abstract**

Disclosed is a clothing management apparatus. The clothing management apparatus of the present disclosure may comprise: a cabinet; a drum rotatably provided in the cabinet; an induction heater heating the drum, wherein the induction heater includes a coil, and a housing accommodating the coil and fixed inside the cabinet from the outside of the drum; a first duct provided outside the drum and having an inlet communicating with an inner space of the drum; a chamber provided outside the drum, and including a first inlet communicating with the first duct, a first outlet communicating with the inner space of the drum, a first flow path connecting the first inlet and the first outlet, a second inlet communicating with an outer space of the drum, a second outlet communicating with the housing of the induction heater, and a second flow path connecting the second inlet and the second outlet; a partition wall provided in the chamber and dividing the first flow path and the second flow path; a first impeller provided in a flow path communicating with the first flow path; and a second impeller provided in a flow path communicating with the second flow path.

## Description

### [Technical Field]

The present disclosure relates to a clothing management apparatus.

### [Background Art]

Generally, a clothing management apparatus may include a washing machine, a dryer, an apparatus for refreshing clothing, etc. The washing machine may be a washer-dryer combo having a drying function.

The washing machine removes contaminants from laundry accommodated in a drum by rotating the drum in a tub where water is stored. The washing machine may be provided with a heating means for heating water or drying laundry.

The dryer rotates the drum in a cabinet and applies heat to laundry in the drum to dry the laundry.

As a heating means in the clothing management apparatus, an electric heater, a gas heater, and a heat pump each have advantages and disadvantages. There are provided concepts for a clothing management apparatus using induction heating as a new heating means that may further strengthen advantages and remedy disadvantages.

However, the prior art discloses only basic concepts for performing induction heating in a washing machine, and does not present specific induction heating module components, connection and operational relationships with basic components of the clothing management apparatus, and specific methods or configurations for improving efficiency and securing safety.

A coil may be wound on an induction heating module provided in a clothing management apparatus such as a washing machine or a dryer, and heat may be transferred to a heating object (drum) by an induced current generated by applying a current to the coil.

In this case, the induction heating module requires a structure for cooling heat generated by the coil. When the heat is not smoothly discharged, the coil may be deteriorated, which may be a factor in the deterioration of the induction heating module.

Korean Patent Laid-Open Publication No. 10-2018-0023276 has disclosed a structure on which a coil is wound. However, the above patent document does not disclose a flow path for effectively cooling the induction heating module.

If a separate duct is provided to simply form a flow path for cooling, this may cause an increase in manufacturing cost and a reduction in air circulation efficiency of the tub.

### [Disclosure]

### [Technical Problem]

The present disclosure aims to solve the above and other problems.

Another objective is to provide a clothing management apparatus, such as a dryer, a washing machine, a washer-dryer combo, or a clothing refreshing apparatus, which may circulate air in a drum.

A further objective is to provide a clothing management apparatus, in which a cooling path for cooling a heat transfer module and a circulation path for removing wet air in a tub are provided, and air flow is simple in the cooling path and the circulation path.

Still another objective is to provide a clothing management apparatus, in which air is guided in a cooling path and a circulation path by one blower, thus being capable of guiding air into components requiring cooling, and circulating air in the tub.

Another objective is to provide a clothing management apparatus, which is capable of removing moisture of air flowing in a circulation path through heat exchange between a cooling path and a circulation path in a duct communicating with a tub.

Another objective is to provide a clothing management apparatus, in which structures outside a tub (or a drum), such as a duct, a heat exchange chamber, a blower, an induction heater, or a driver for driving the induction heater are efficiently disposed.

### [Technical Solution]

In order to accomplish the above objectives, a clothing management apparatus according to an aspect of the present disclosure includes a chamber having a first flow path and a second flow path that are partitioned from each other.

The clothing management apparatus includes an induction heater heating a drum, a first duct having an inlet communicating with an inner space of the drum, and a partition wall provided in the chamber and dividing the first flow path and the second flow path.

The clothing management apparatus includes a first impeller provided in a flow path communicating with the first flow path, and a second impeller provided in a flow path communicating with the second flow path.

The chamber may be provided outside the drum.

The chamber includes a first flow path connecting the outlet of the first duct and the drum, and a second flow path connecting the outside of the drum and the induction heater.

The chamber includes a first inlet communicating with an outlet of the first duct, and a first outlet communicating with the inner space of the drum. The chamber includes a second inlet communicating with an outer space of the drum, and a second outlet communicating with the housing of the induction heater.

The first flow path connects the first inlet and the first outlet. The second flow path connects the second inlet and the second outlet.

The clothing management apparatus may be a dryer. The clothing management apparatus may be a dryer having no tub.

The clothing management apparatus includes a cabinet. The cabinet may define the appearance of the clothing management apparatus.

The drum may be rotatably provided in the cabinet.

The first duct may be provided outside the drum.

The chamber may be provided outside the drum.

The induction heater may include a coil. The coil may generate a magnetic field if power is applied thereto. The coil may heat the drum through the generated magnetic field.

The induction heater may include a housing that accommodates the coil. The housing may be disposed outside the drum. The housing may be secured to the inside of the cabinet.

The drum may have an elongated cylinder shape.

The chamber may extend in a radial direction of the drum. The chamber may extend vertically.

The first inlet may be positioned in an upper portion of the chamber. The first outlet may be positioned in a lower portion of the chamber. The first outlet may be positioned under the partition wall.

A condensate discharge path may be provided in the lower portion of the chamber. The condensate discharge path may be positioned under the first outlet.

The second inlet may be positioned in the lower portion of the chamber. The second outlet may be positioned in the upper portion of the chamber. The second outlet may be positioned above the partition wall.

The partition wall may extend in the longitudinal direction of the chamber.

The partition wall may include a first length portion extending in the longitudinal direction of the chamber, a first width portion extending in a widthwise direction of the chamber from the first length portion, and a second length portion extending in the longitudinal direction of the chamber from the first width portion and facing the first length portion.

The partition wall may include a second width portion extending in the widthwise direction of the chamber from the second length portion. The second width portion may extend from a position opposite to the first width portion of the second length portion.

The partition wall may include a third length portion extending in the longitudinal direction of the chamber from the second width portion. The third length portion may face the second length portion.

The first length portion and the second length portion may face each other, and be spaced apart from each other in the widthwise direction of the chamber. The second length portion and the third length portion may face each other, and be spaced apart from each other in the widthwise direction of the chamber. The first to third length portions may be sequentially arranged in the widthwise direction of the chamber.

The first inlet may be positioned between the first length portion and the second length portion. The first inlet may be disposed adjacent to the first width portion. The first inlet may be formed on a first side facing the drum of the chamber.

The second inlet may be positioned between the second length portion and the third length portion. The second inlet may be disposed adjacent to the second width portion. The second inlet may be formed on a second side facing away from the drum of the chamber.

The first outlet may be formed in the first side.

The second outlet may be formed in the first side.

The drum may be opened forward.

The chamber may be positioned at a rear of the drum.

The first duct may extend in the longitudinal direction of the drum. The first duct may extend in a direction from front to rear.

The induction heater may be positioned within a length of the drum on the outside of the drum. The first duct and the induction heater may be arranged in a circumferential direction of the drum.

The clothing management apparatus may include a first blowing housing that accommodates the first impeller, and a second blowing housing that accommodates the second impeller. The clothing management apparatus may include a third blowing housing that connects the second outlet of the chamber and the inlet of the second blowing housing.

The first blowing housing may include an inlet connected to the first duct, and an outlet connected to the first inlet of the chamber.

The second blowing housing may be connected to the housing of the induction heater.

The first to third blowing housings may be arranged in the radial direction of the drum. The first to third blowing housings may be sequentially arranged in the radial direction of the drum. The first to third blowing housings may be sequentially arranged in a vertical direction.

A motor for rotating the first and second impellers may be installed in the third blowing housing.

The clothing management apparatus may further include a control unit for driving the induction heater. The control unit may be secured to the inside of the cabinet outside the drum. The control unit may be installed on the inner wall of the cabinet.

The second blowing housing may include an inlet connected to the second outlet, and a first cooling outlet connected to the housing of the induction heater. The second blowing housing may further include a second cooling outlet connected to the control unit.

The first impeller may generate air flow from the first duct toward the first flow path.

The second impeller may generate air flow from the second flow path toward the housing of the induction heater.

The clothing management apparatus may further include a motor configured to rotate the first impeller and the second impeller.

The motor may be one motor for rotating the first impeller and the second impeller. One motor may rotate the first impeller and the second impeller.

A rotating shaft of the first impeller and a rotating shaft of the second impeller may be positioned on a straight line.

The clothing management apparatus may be a washer-dryer combo for performing washing and drying. The clothing management apparatus may be the washer-dryer combo including the tub.

The tub may be disposed in the cabinet. The tub may accommodate the drum. The tub may provide a space for storing water.

The drum may be rotatably provided in the tub. The drum may include a cylindrical body and a hole formed in the body.

The first duct and the chamber may be provided outside the tub.

The second inlet may communicate with the outer space of the tub. The second inlet may communicate with a space between the cabinet and the tub.

The tub may extend in the direction of the rotating shaft of the drum.

The first side may face the tub. The second side may face away from the tub. The second inlet may communicate with the outside of the tub and the inner space of the cabinet.

The cabinet may have on a front thereof an input port. The tub may have on a front thereof an opening.

A gasket may connect the input port of the cabinet and the opening of the tub. The first duct may be connected to the gasket.

The first duct may extend in the longitudinal direction of the tub.

The induction heater may be installed on the outer circumference of the tub. The first duct and the induction heater may be arranged in the circumferential direction of the tub.

The control unit may be installed on the outer surface of the tub. The control unit may be installed on the circumferential surface of the tub. The control unit may be installed on the tub.

An example for solving the above-mentioned objectives will be described.

Components requiring cooling in the clothing management apparatus according to this embodiment are an IH coil, a heat exchanger, and an IH drive. In addition, a separate circulation path capable of removing wet air is also required.

A plurality of fans may be required to perform air flow in the circulation path and the cooling path, which are separate flow paths. In order to use a plurality of fans with one motor, each scroll is vertically mounted on each fan, an upper scroll has a coil cooling outlet and two IH drive outlets, sucks cooling flow connected to an upper end of the heat exchanger and sends the flow to each cooling outlet.

At this time, the partition wall may be provided so that heat exchange is effectively performed in the circulation path and the cooling path. To be more specific, flow paths for cooling flow and circulation flow are present on the upper end of the heat exchanger. The cooling flow and the circulation flow are separated by the partition wall in the heat exchanger, and heat exchange is performed through the partition wall.

The cooling flow introduces bottom cool air through a cooling flow inlet that is provided at a rear position under the heat exchanger, exchanges heat with the circulation flow through the partition wall, and then moves toward the cooling outlet.

Water condensed through heat exchange in the heat exchanger may be introduced into the tub and discharged to the outside through a drain pump, or may be directly connected to a drain pipe through the flow path provided in the duct and discharged to the outside.

To be more specific, the present embodiment provides a clothing management apparatus including a cabinet, a tub provided inside the cabinet, a drum rotatably provided inside the tub, accommodating clothing, and at least partially formed of a metal material, an induction module provided on an outer surface of the tub and heating the drum through a magnetic field generated when a current is applied to a coil, a circulation path guiding to introduce air discharged from the tub into the tub again, a cooling path guiding air discharged from the tub into the induction module, and a blower blowing air in the circulation path and the cooling path. The blower includes a first impeller guiding air through the circulation path, a second impeller guiding air through the cooling path, and a blower motor providing a driving force to the first impeller and the second impeller.

Further, the circulation path includes a first duct that is provided to extend to the rear of the tub and guides air discharged from the tub, a first blower housing that is connected to the first duct and is provided to accommodate the first impeller, and a second duct that is connected to the first blower housing and is provided to communicate with the rear of the tub.

Further, the cooling path includes a second blower housing that is connected to the second duct at a position different from that of the first blower housing and is provided to accommodate the second impeller, and a module cooling duct that is connected to a side of the second blower housing to guide air to the induction module.

Further, the first blower housing and the second blower housing are provided such that the first impeller and the second impeller may be rotated about the same axis.

Further, the clothing management apparatus includes a module controller that controls the operation of the induction module, and the second blower housing guides air to cool the module controller at a position different from a position where it communicates with the module cooling duct.

Further, the module controller is provided to be secured to a side of the tub.

Further, the clothing management apparatus includes a plurality of partition walls extending in the longitudinal direction of the second duct in the second duct.

Further, the plurality of partition walls are provided to be space apart from each other by a predetermined distance.

Further, air guided through the first impeller is introduced between the first and second partition walls that are adjacent to each other among the plurality of partition walls, and air is guided toward the second impeller between the second and third partition walls that are adjacent to each other among the plurality of partition walls.

Further, the plurality of partition walls are provided so that inside air and outside air are not mixed with each other.

Further, a flow path between the first and second partition walls is connected to the first blower housing, and a flow path between the second and third partition walls is connected to the second blower housing.

Further, the clothing management apparatus includes a blower motor housing that accommodates the blower motor, the second blower housing is provided under the blower motor housing, the first blower housing is provided under the second blower housing, and air is guided through the blower motor housing into the second blower housing.

Further, condensate generated as air flows into the second duct is discharged through the lower portion of the tub.

Further, the induction module includes a base housing that is provided on the circumferential surface of the tub to accommodate the coil on the upper surface, and a module cover that is coupled to the base housing above the coil, and the module cover has a module cooling duct connector through which air guided by the module cooling duct is introduced.

### [Advantageous Effects]

In accordance with at least one of embodiments of the present disclosure, heating for washing or heating for drying can be performed without directly heating washing water, so that energy efficiency can be excellent.

Further, because a drum is directly heated instead of heating washing water, heat loss generated during heating for washing can be minimized, and washing or drying time can be shortened through rapid heating.

Further, a flow path for cooling a heat transfer module is provided, thus preventing overheating.

Further, air is guided by a single blower in a module cooling duct and a circulation path, thereby securing space utilization and reducing manufacturing cost.

### [Description of Drawings]

FIG. 1 is a perspective view illustrating a clothing management apparatus according to an embodiment.
FIG. 2 is a sectional view illustrating the clothing management apparatus according to the embodiment.
FIG. 3 is an exploded perspective view illustrating an induction module of the clothing management apparatus according to the embodiment.
FIG. 4 is a diagram illustrating the induction module.
FIGS. 5 and 6 are internal perspective views illustrating the clothing management apparatus according to the embodiment.
FIG. 7 is a diagram illustrating the chamber shown in FIG. 6.
FIG. 8 is a diagram illustrating the interior of a blower of the clothing management apparatus according to the embodiment.
FIG. 9 is a diagram illustrating the blower of the clothing management apparatus according to the embodiment in a side view and a plan view.

### [Mode for Disclosure]

Hereinafter, embodiments of the present disclosure will be described in detail with reference to the accompanying drawings. The same reference numerals are used throughout the drawings to designate the same or similar components.

The suffixes "module" and "unit" for components used in the following description are given or used in consideration of only the ease of describing the specification, and do not have distinct meanings or roles.

When it is determined that the detailed description of the known art related to an embodiment disclosed in the specification may be obscure the gist of the embodiment, the detailed description thereof will be omitted. Further, it is to be understood that the accompanying drawings are merely for making those skilled in the art easily understand the embodiment disclosed herein, the technical spirit of the present disclosure is not limited to the accompanying drawings, and the present disclosure covers various alternatives, modifications, equivalents and other embodiments that fall within the spirit and scope of the present disclosure.

Although the terms "first", "second", etc. may be used herein to describe various components, these components should not be limited by these terms. These terms are only used to distinguish one component from another component.

It should be understood that when a component is referred to as being "coupled" or "connected" to another component, it can be directly coupled or connected to the other component or intervening components may be present therebetween. In contrast, it should be understood that when a component is referred to as being "directly coupled" or "directly connected" to another component, there are no intervening components present.

Herein, the singular forms are intended to include the plural forms as well, unless the context clearly indicates otherwise.

Furthermore, although each drawing is described for the convenience of description, it is apparent to those skilled in the art that other embodiments may be implemented by combining at least two or more drawings without departing from the scope of the present invention.

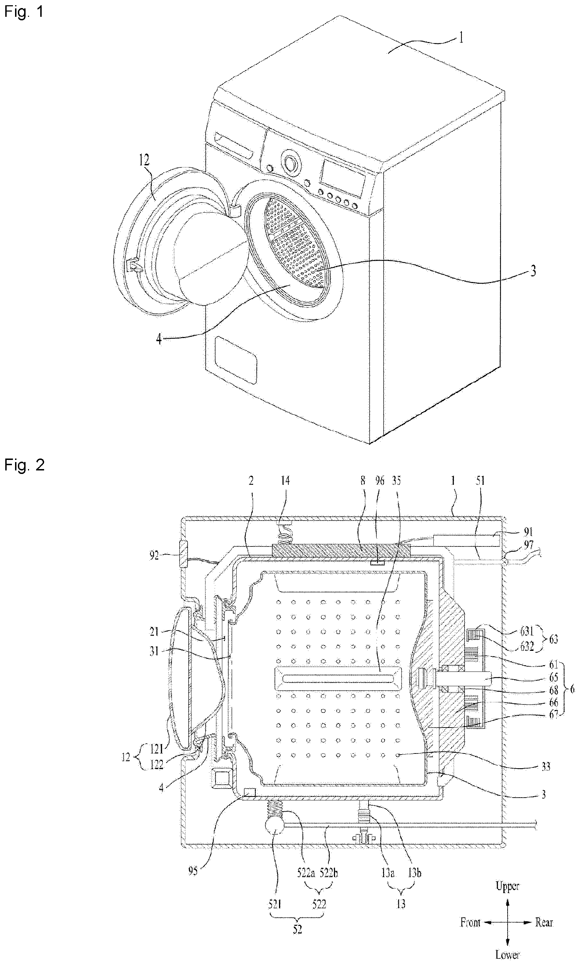

FIG. 1 is a perspective view illustrating a clothing management apparatus according to an embodiment, and FIG. 2 is a sectional view illustrating the clothing management apparatus according to the embodiment.

The clothing management apparatus according to an embodiment of the present disclosure may include a cabinet 1 that defines an appearance, a tub 2 that is provided in the cabinet, and a drum 3 that is rotatably provided in the tub 2 and accommodates an object (e.g., a laundry object, a drying object, or a refresh object). For instance, when clothing is washed by washing water, this may be referred to as the laundry object. When wet clothing is dried using heat, this may be referred to as the drying object. When dry clothing is refreshed using hot air, cool air or steam, this may be referred to as the refresh object. Thus, clothing may be washed, dried or refreshed through the drum 3 of the clothing management apparatus.

The cabinet 1 may include a cabinet opening that is provided on the front of the cabinet 1 to allow the object to be put into and taken out from the cabinet. The cabinet 1 may be provided with a door 12 that is rotatably mounted on the cabinet to open or close an input port.

The door 12 may include an annular door frame 121 and an inspection window 122 provided on a central portion of the door frame.

Here, when a direction is defined to help the understanding of the detailed structure of the clothing management apparatus that will be described below, a direction facing the door 12 with respect to the center of the cabinet 1 may be defined as a front.

Further, a direction diametrically opposite to the direction facing the door 12 may be defined as a rear, and right and left directions may be naturally defined depending on the above-defined front-rear direction.

The tub 2 is provided in a cylindrical shape with a longitudinal axis thereof being parallel to a lower surface of the cabinet or forming 0 to 30° with the lower surface, thus defining a space in which water may be stored, and has on a front thereof a tub opening 21 to communicate with the input port.

The tub 2 may be fixed to the lower surface (bottom surface) of the cabinet 1 by a lower support portion 13 including a support bar 13a and a damper 13b connected to the support bar 13a. Thus, vibration generated in the tub 2 may be attenuated by the rotation of the drum 3.

Further, an elastic support portion 14 secured to the upper surface of the cabinet 1 may be connected to the upper surface of the tub 2. This may also serve to attenuate vibration generated in the tub 2 and transmitted to the cabinet 1.

The drum 3 is provided in a cylindrical shape with a longitudinal axis thereof being parallel to the lower surface (bottom surface) of the cabinet or forming 0 to 30° with the lower surface, thus accommodating the object, and may have on a front thereof a drum opening 31 communicating with the tub opening 21. An angle between the central axis of the tub 2 and the bottom surface may be the same as an angle between the central axis of the drum 3 and the bottom surface.

Further, the drum 3 may include a plurality of through holes 33 that are provided to pass through the outer circumference. Through the through holes 33, air and washing water may be introduced between the inside of the drum 3 and the inside of the tub 4.

A lifter 35 may be further provided on the inner circumference of the drum 3 to stir the object when the drum is rotated, and the drum 3 may be rotated by a driving unit 6 that is provided in back of the tub 2.

The driving unit 6 may include a stator 61 that is secured to the rear surface of the tub 2, a rotor 63 that is rotated by the electromagnetic action with the stator, and a rotating shaft 65 that passes through the rear surface of the tub 2 to connect the drum 3 and the rotor 63.

The stator 61 may be secured to the rear surface of a bearing housing 66 that is provided on the rear surface of the tub 2, and the rotor 63 may include a rotor magnet 632 that is provided on the outside of the stator in the radial direction, and a rotor housing 631 that connects the rotor magnet 632 and the rotating shaft 65.

A plurality of bearings 68 may be provided in the bearing housing 66 to support the rotating shaft 65.

Further, a spider 67 may be provided on the rear surface of the drum 3 to easily transmit the rotating force of the rotor 63 to the drum 3, and the rotating shaft 65 may be secured to the spider 67 to transmit the rotation power of the rotor 63.

Meanwhile, the clothing management apparatus according to an embodiment of the present disclosure may further include a water supply hose 51 supplied with water from the outside, and the water supply hose 51 defines a flow path that supplies water to the tub 2.

Further, a gasket 4 may be provided between the input port of the cabinet 1 and the tub opening 21. The gasket 4 serves to prevent water in the tub 2 from leaking into the cabinet 1 and to prevent the vibration of the tub 2 from being transmitted to the cabinet 1.

Meanwhile, the clothing management apparatus according to an embodiment of the present disclosure may further include a drain unit 52 that discharges water in the tub 2 to the outside of the cabinet 1.

The drain unit 52 may include a drain pipe 522 forming a drain passage through which water in the tub 2 moves, and a drain pump 521 draining water through the drain pipe 522. The drain pump 521 may discharge water in the tub 2 to the outside by generating a pressure difference in the drain pipe 522.

In detail, the drain pipe 522 may include a first drain pipe 522a that connects the lower surface of the tub 2 and the drain pump 521, and a second drain pipe 522a that is connected at one end thereof to the drain pump 521 to define a flow path where water moves to the outside of the cabinet 1.

The clothing management apparatus according to an embodiment of the present disclosure may further include an induction module 8 that heats the drum 3. The induction module 8 may inductively heat the drum 3. Hereinafter, the induction module 8 may be referred to as an induction heater 8.

The induction module 8 may be mounted on the circumferential surface of the tub 2. The induction module 8 may generate a magnetic field by applying a current to a coil around which wire is wound. The induction module 8 inductively heats the circumferential surface of the drum 3 through the magnetic field. If the induction module is driven, the outer circumference of the drum opposite to the induction module 8 may be heated to very high temperature within a very short time.

The induction module 8 may be controlled by a module controller 86 that is secured to the cabinet 1 or the tub 2. The module controller 86 may control the internal temperature of the tub, by controlling the driving of the induction module 8. The module controller 86 may include a processor that controls the driving of the clothing management apparatus. The module controller 86 may include an inverter processor that controls the induction module 8. That is, the driving of the clothing management apparatus and the driving of the induction module 8 may be controlled through one processor.

A processor for controlling the induction module 8 and a processor for controlling other components of the clothing management apparatus may be separately provided. The processor for controlling the induction module 8 and the processor for controlling other components may be communicatively connected to each other. This can improve control efficiency and prevent the overload of the processor.

A temperature sensor 95 may be provided in the tub 2. The temperature sensor 95 may be connected to the control unit 9 and transmit information about the internal temperature of the tub 2 to the control unit 9. Particularly, the temperature sensor may be provided to sense the temperature of washing water or wet air. Therefore, this may be referred to as a washing-water temperature sensor.

The temperature sensor 95 may be provided near the bottom in the tub. Thus, the temperature sensor 95 may be positioned below the lowermost end of the drum. FIG. 2 shows the temperature sensor 95 provided to be in contact with the bottom surface of the tub. However, the temperature sensor may be provided to be spaced apart from the bottom surface by a predetermined distance. Thus, it is possible to precisely measure the temperature of the washing water or air by causing the washing water or air to surround the temperature sensor.

The temperature sensor 95 may be mounted to pass through the tub from the lower portion to the upper portion, but may be mounted to pass through the tub from the front to the rear. That is, the temperature sensor may be mounted to pass through the front surface (surface forming the tub opening) of the tub instead of the circumferential surface thereof.

Therefore, when the clothing management apparatus heats the washing water through the induction module 8, the temperature sensor may detect whether the washing water is heated to target temperature. Based on the detected result of the temperature sensor, the driving of the induction module may be controlled.

Further, when all of the washing water is drained, the temperature sensor 95 may detect the temperature of the air. Residual washing water or coolant may be present in the bottom of the tub. The temperature sensor 95 may sense the temperature of wet air.

The clothing management apparatus according to an embodiment of the present disclosure may include a drying temperature sensor 96. The position of the drying temperature sensor 96 may be different from the position of the above-described temperature sensor 95. The temperature measurement target of the drying temperature sensor 96 may be different from the temperature measurement target of the above-described temperature sensor 95.

The drying temperature sensor 96 may detect the temperature of air heated through the induction module 8. That is, the drying temperature sensor 96 may detect the drying temperature. The drying temperature sensor 96 may detect whether air is heated up to the target temperature. Based on the detected result of the drying temperature sensor, the driving of the induction module 8 may be controlled.

The drying temperature sensor 96 may be positioned at an upper position of the tub 2. The drying temperature sensor 96 may be provided near the induction module 8. The drying temperature sensor 96 may be provided on the inner surface of the tub 2 outside the projection surface of the induction module 8. The drying temperature sensor 96 may detect the temperature of the circumferential surface of the drum 3 that is opposite to the drying temperature sensor 96. The above-described temperature sensor 95 may be provided to detect the temperature of the surrounding water or air, and the drying temperature sensor 96 may be provided to detect the temperature of the drum or the drying air temperature around the drum.

Since the drum 3 is configured to rotate, the temperature of the circumferential surface of the drum may be indirectly sensed by sensing the temperature of air near the outer circumference of the drum 30.

It is possible to determine whether to continue the driving of the induction module up to a target temperature or whether to vary the output of the induction module, through the temperature sensor 95. It is possible to determine whether the drum is overheated or not through the drying temperature sensor 96. When it is determined that the drum is overheated, the module controller 86 may forcibly stop driving the induction module.

The clothing management apparatus according to an embodiment of the present disclosure may have a drying function. In this case, the clothing management apparatus according to an embodiment of the present disclosure may be referred to as a washer-dryer combo.

The clothing management apparatus may dry the object by cooling air on the inner circumference of the tub and discharging condensed water to the outside. Alternatively, the apparatus may dry the object by discharging wet air in the tub to the outside and sucking dry air.

In other words, even if there is no air circulation, drying may be performed by condensing water. Coolant may be supplied into the tub to more effectively condense water and thereby increase drying efficiency. As a surface area where the coolant and the tub meet, that is, a surface area where the coolant contacts the air increases, drying efficiency may be increased.

The coolant may be supplied while being widely spread from the rear surface or one side or both sides of the tub. By supplying the coolant as such, the coolant may flow along the inner surface of the tub to prevent it from flowing into the drum.

At this time, it is unnecessary to provide a separate heater for drying. That is, the drying may be performed using the induction module 8. That is, washing water may be heated during washing, an object may be heated during spin-drying, and an object may be heated during drying, through one induction module.

When the drum 3 is driven and the induction module 8 is driven, the entire circumferential surface of the drum may be substantially heated. The heated drum may exchange heat with wet laundry to heat the laundry. Of course, air in the drum may also be heated. Thus, if air is supplied to the interior of the drum 3, air from which water is evaporated through heat exchange may be discharged to the outside of the drum 3.

The supply position of the air and the discharge position of the air may be determined so that heated air is uniformly supplied to the drying object and the wet air is smoothly discharged. The air may be supplied from the upper portion of the front of the drum 3, and the air may be discharged through the lower portion of the rear of the drum 3, i.e. the lower portion of the rear of the tub.

This will be described below in detail.

Thus, since the air itself is not directly heated, the temperature of heating air may be lower than the temperature of heating air in a general heater heating dryer. Therefore, the effect of preventing damage or deformation of clothing due to high temperature may be expected.

Moreover, as described above, since the drum is driven, the induction module is driven, clothing repeatedly rises and falls as the drum is driven, and the heating position of the drum is not at the lower portion but the upper portion of the drum, the overheating of the clothing can be effectively prevented.

The clothing management apparatus may be provided with a control panel 92. The control panel 92 may be provided on the front surface or upper surface of the clothing management apparatus. The control panel 92 may provide a user interface. Various user inputs may be performed through the control panel 92. The control panel 92 may display various pieces of information of the clothing management apparatus. That is, a manipulation unit for user manipulation and a display unit for displaying information to a user may be provided on the control panel 92.

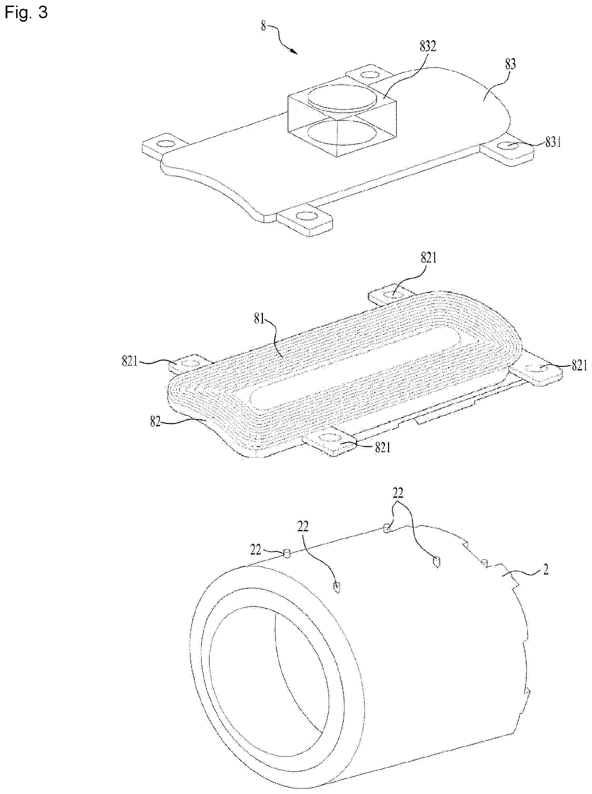

FIG. 3 is an exploded perspective view illustrating the induction module of the clothing management apparatus according to the embodiment.

Hereinafter, the induction module of the clothing management apparatus according to the embodiment will be described in detail with reference to FIG. 3.

The clothing management apparatus according to an embodiment of the present disclosure may be provided with the induction may be provided with the induction module 8 that inductively heats the drum 3. The induction module 8 may heat washing water by heating the drum 3. The induction module 8 may dry laundry by heating the drum 3. The principle of heating the drum 3 by the induction module 8 is as follows.

The induction module 8 may be mounted on the outer circumference of the tub 2. The induction module 8 may generate a magnetic field by applying a current to the coil 81 around which the wire is wound. The induction module 8 may heat the circumferential surface of the drum 3 through the generated magnetic field. The wire may include a core and a coating surrounding the core. The core may be a single core. Of course, a plurality of cores may be entangled to form one core. The thickness or diameter of the wire may be determined by the thickness of the core and coating.

If an alternating current that is changed in phase flows through the coil 81 around which the wire is wound, the coil 81 forms a radial AC magnetic field according to the Ampere's circuital law.

The AC magnetic field concentrates on the drum (metal material) made of a conductor having high magnetic permeability. The magnetic permeability refers to a degree to which a medium is magnetized with respect to a given magnetic field. At this time, according to Faraday's law of induction, an eddy current is formed in the drum 3. The eddy current flows through the drum 3 made of the conductor, and is converted into Joule heat by the resistance of the drum 3 itself, so that the inner wall of the drum 3 is directly heated.

If the inner wall of the drum 3 is directly heated, the temperature of air in the drum 3 and the temperature of laundry contacting the inner wall of the drum 3 are increased together. Therefore, since the laundry may be directly heated, faster drying is possible compared to a drying apparatus using only a hot air drying method that is an indirect heating method, or a low temperature dehumidifying and drying method.

In the case of the clothing management apparatus having a washing function, washing water may be heated without a separate heating wire and flow path. Since the washing water continuously contacts the inner and outer walls of the drum 3 heated to a high temperature, it is not necessary to form a separate flow path and heating wire under the tub. According to the above-described method, it is possible to more rapidly heat washing water compared to a method in which the separate flow path and heating wire are formed under the tub and washing water is heated using the flow path and heating wire.

The induction module 8 according to this embodiment may include a coil 81, a base housing 82, and a module cover 83.

The induction module 8 may be provided on the outer surface of the tub 2, and heat the drum 3 through the magnetic field generated when a current is applied to the coil 81.

The base housing 82 may be provided to be spaced apart from the outer surface of the tub 2 by a predetermined distance.

The base housing 82 may accommodate and support the wound coil 81. The base housing 82 may have a shape corresponding to that of the outer circumference (or circumferential surface) of the tub 2. The base housing 82 and/or the induction module 8 may be uniformly spaced apart from the tub 2.

Thus, the amount of the magnetic field transmitted through the base housing 82 is not changed depending on a position, so that the drum 3 may be uniformly heated.

The tub 2 may include a tub connector 22. The tub connector 22 may secure the induction module 8 to the circumferential surface of the tub 2. The base housing 82 and the tub 2 may be spaced apart from each other by the length of the tub connector 22.

The base housing 82 may include a housing connector 821 provided at a position corresponding to the tub connector 22. The tub connector 22 and the housing connector 821 may be coupled to each other, so that the induction module 8 may be secured to the outer circumference of the tub 2.

The coil 81 may be wound and provided in the base housing 82. The coil 81 may be wound along the upper surface of the base housing 82. The size of the wound coil 81 may be equal to or smaller than that of the tub 2 in the longitudinal direction of the tub 2.

This can prevent other components in the clothing management apparatus from being heated.

However, when the length of the coil is excessively shorter than that of the tub 2, it may be difficult to effectively transmit heat. Thus, the coil may be wound to be disposed near the front surface of the tub 2 and the rear surface of the tub 2.

A module cover 83 may cover the top of the coil 81. The module cover 83 may have a shape corresponding to that of the base housing 82. The module cover 83 may be coupled to the base housing 82.

The module cover 83 may be provided with a cooling path connector 832 communicating with a module cooling duct 755 that will be described below. Although it is shown in the drawing that the cooling path connector 832 is disposed on the center of the module cover 83, the present disclosure is not limited thereto.

That is, the cooling path connector 832 may be formed at various positions according to a structure in which air is discharged from the induction module 8.

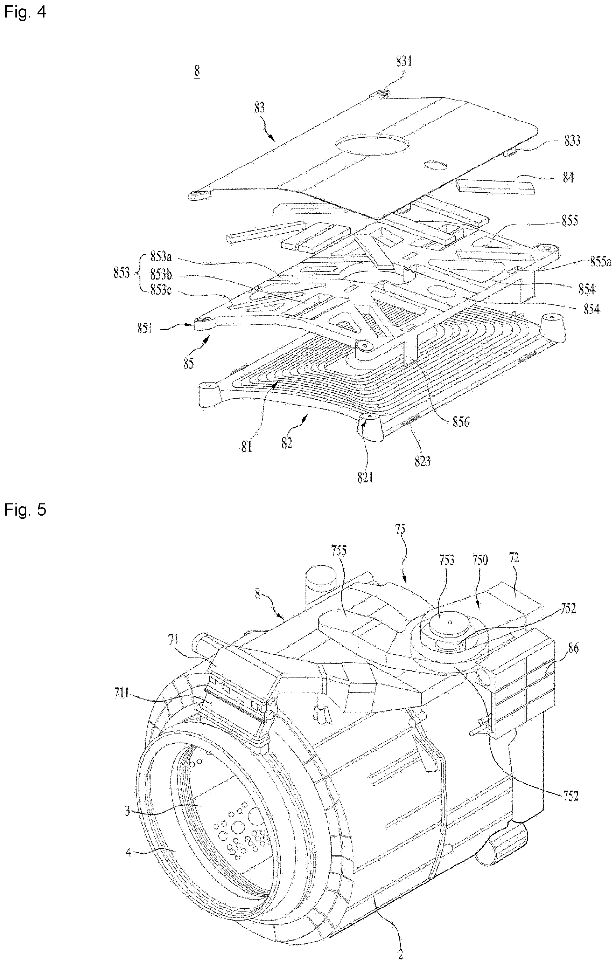

FIG. 4 is a diagram illustrating the induction module.

Referring to FIG. 4, the induction module 8 may further include a permanent magnet 84 and a permanent magnet housing 85 that accommodates the permanent magnet 84. The module cover 83 may be coupled to the top of the permanent magnet housing 85.

The induction module 8 may include the base housing 82 accommodating the coil 81, the permanent magnet housing 85 accommodating the permanent magnet 84, and the module cover 83 covering the permanent magnet housing 85 to prevent the removal of the permanent magnet 84.

The permanent magnet 84 may serve as a blocking member. The permanent magnet 84 may prevent peripheral components other than the drum 3 from being heated. The permanent magnet 84 may increase the heating efficiency by concentrating the magnetic field generated by the coil 81 in the drum direction.

The base housing 82 may have a substantially quadrangular shape. The quadrangular shape preferably means a rectangular or oblong shape. The coil 81 is accommodated in the upper portion of the base housing 82.

Preferably, a base connector 821 is provided on a corner portion of the base housing 82, and the base connector 821 protrudes outwards from the corner portion. Further, a ring 823 is provided on an edge of the base housing 82 so that a hook 856 of the permanent magnet housing 85 is coupled thereto. It is preferable that two rings 823 are provided on each of opposite long sides of the base housing 82, i.e. a total of four rings are provided.

Meanwhile, the permanent magnet housing 85 is preferably provided in a shape corresponding to the shape of the base housing 82. Thus, the permanent magnet housing 85 may be provided in the rectangular or oblong shape.

The permanent magnet housing 85 is provided with a mounting portion 853 in which the permanent magnet 84 is installed. Further, since the permanent magnet housing 85 is preferably formed of one component, a connector 854 is preferably provided to connect a plurality of mounting portions 853. The connector 854 may be vertically opened. The connector 854 may dissipate heat generated from the coil 81.

Preferably, a plurality of mounting portions 853 may be provided to extend radially from a portion near the center of the base housing 82 toward the edge. Since the mounting portion 853 is a portion in which the permanent magnet 84 is seated, the mounting portion preferably has a shape corresponding to that of the permanent magnet 84, that is, the shape of a narrow oblong.

To be more specific, the mounting portion 853 may include a long-side mounting portion 853a, a short-side mounting portion 853b, and a corner mounting portion 853c. Two long-side mounting portions 853a may be provided on both sides around the center of each long side of the base housing 82. Two short-side mounting portions 853b may be provided on both sides around the center of each short side of the base housing 82. Four corner mounting portions 853c may be provided to extend from the central portion of the base housing 82 toward the corners.

A through portion 855 may be provided in a portion where no mounting portion 853 is provided, e.g. a space between the mounting portion 853 and a neighboring mounting portion 853 to be vertically opened. That is, the through portion 855 is preferably provided in a shape corresponding to that of the space between the mounting portion 853 and the neighboring mounting portion. Further, since the through portion 855 functions to dissipate heat generated from the coil 81, its area is preferably as large as possible as long as the strength of the permanent magnet housing 85 is maintained.

If high-temperature heat is applied to the permanent magnet 84, atoms lose magnetism while moving in disorder. This may lead to a reduction in durability of the induction module 8.

Therefore, the durability of the induction module can be prevented from being reduced by cooling heat generated from the induction module using the cooling path structure by the above-described duct.

Preferably, a mounting connector 851 is provided on the corner portion of the permanent magnet housing 85, and the mounting connector 851 protrudes outward from the corner portion.

The hook 856 is provided on the edge of the permanent magnet housing 85 to extend downward, and the hook 856 is inserted and coupled to the ring 823 of the base housing 82. Further, a groove 855a is provided at a predetermined position in the permanent magnet housing 85, and the groove 855a is coupled to a coupler 833 (or hook) of the module cover 83.

Preferably, the module cover 83 has a shape substantially corresponding to that of the permanent magnet housing 85. For example, the module cover 83 preferably has a rectangular shape. The through portion 835 is formed in the center of the module cover 83, and the through portion 835 allows outside air to be introduced or allows heat generated from the coil to be dissipated.

Preferably, a cover connector 831 is provided on the corner portion of the module cover 83, and a hole of the cover connector 831 is an elongated hole. The hook 833 is provided on the lower portion of the module cover 83 to be coupled to the groove 855a of the permanent magnet housing 85.

That is, the induction module 8 may be provided such that the base connector 821 of the base housing 82, the mounting connector 851 of the permanent magnet housing 85, and the cover connector 831 of the module cover 83 are fastened to each other.

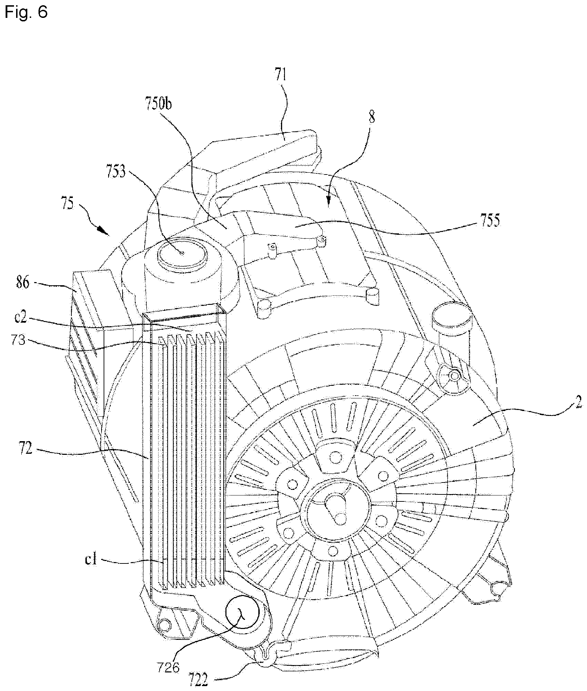

FIGS. 5 and 6 are internal perspective views illustrating the clothing management apparatus according to the embodiment. To be more specific, FIG. 5 is a front perspective view showing a tub and duct structure and FIG. 6 is a rear perspective view showing the tub and duct structure when seen from a rear.

Hereinafter, this will be described with reference to FIGS. 5 and 6.

The clothing management apparatus according to this embodiment may be provided with a circulation path C1 and a cooling path C2.

In detail, the clothing management apparatus according to this embodiment may include a first duct 71 and a chamber 72. Hereinafter, the chamber 72 may also be referred to as a second duct 72.

The first duct 71 may communicate with the tub 2. The first duct 71 may communicate with the front side of the tub 2. The first duct 71 may communicate with the gasket 4 or the upper portion of the front of the tub 2 and extend to the rear of the tub 2.

That is, the first duct 71 may be provided on the upper portion of the tub 2 to extend from the front of the tub 2 toward the rear thereof.

The first duct 71 may include an inlet portion 711 connected to the tub 2 or the gasket 4. The inlet portion 711 may be provided in various forms according to the connecting method.

That is, although FIGS. 2 and 5 show that the inlet portion 711 communicates with the gasket 4 to extend in the radial direction of the tub 2 and the first duct 71 extends to the rear of the tub 2, the present disclosure is not limited thereto.

The second duct 72 may communicate with the tub 2. The second duct 72 may communicate with the rear portion of the tub 2. The second duct 72 may extend along the rear surface of the tub 2. The second duct 72 may be provided on the lower portion of the rear of the tub 2 to communicate with the inside of the tub 2. The second duct 72 may extend upward along the rear surface of the tub 2.

As will be described later, heat exchange may occur in the second duct 72. One end of the second duct 72 may be connected to the lower portion of the rear of the tub 2. A length by which the second duct 72 extends upward along the rear surface of the tub 2 is secured, thus improving heat exchange efficiency.

The first duct 71 and the second duct 72 may provide the above-described circulation path.

According to this embodiment, the clothing management apparatus may include a blower 75. The blower 75 may circulate air in the first duct 71 and the second duct 72.

The blower 75 may include a first impeller 751, a second impeller 752, and a blower motor 753.

The blower 75 may include a blowing housing 750 that accommodates the first impeller 751 and the second impeller 752. The blowing housing 750 may accommodate the blowing motor 753.

The blowing motor 753 may be mounted on the blowing housing 750. The blowing motor 753 may be accommodated in the blowing housing 750.

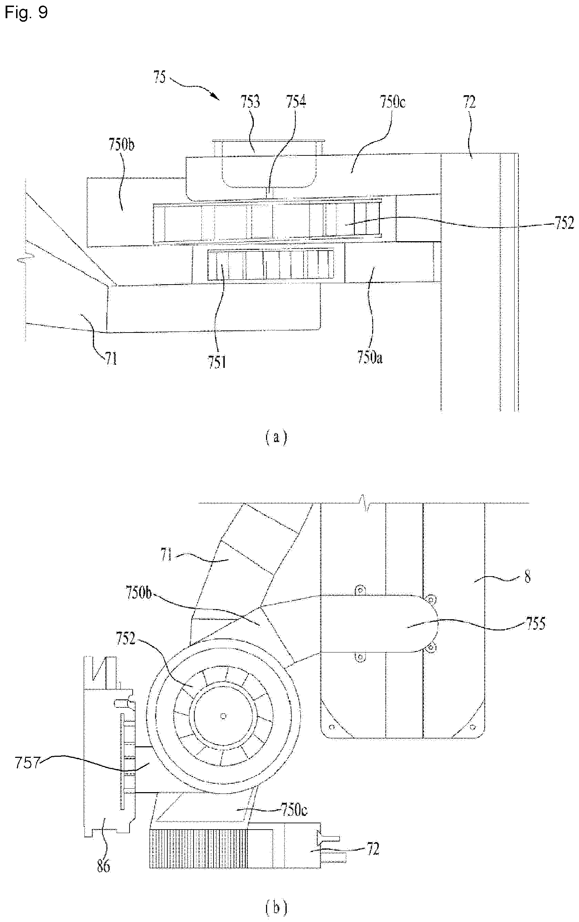

Referring to FIGS. 6 and 9, the blowing housing 750 may include a first blowing housing 750a, a second blowing housing 750b, and a third blowing housing 750c.

The blowing housing 750 may be positioned on the circulation path C1 and the cooling path C2. The blowing housing 750 may be positioned on the circulation path C1 and the cooling path C2 to provide a space in which air in the circulation path C1 and the cooling path C2 may move.

To be more specific, the blowing housing may be provided to form both a portion of the circulation path C1 and a portion of the cooling path C2.

That is, the first blowing housing 750a, the second blowing housing 750b, and the third blowing housing 750c each may be provided to form a portion of the blowing housing 750.

The first blowing housing 750a may be provided to define a space in which the first impeller 751 is accommodated and to connect the first duct 71 and the second duct 72.

The second blowing housing 750b may be provided to define a space in which the second impeller 752 is accommodated and to connect the second duct 72 and the module cooling duct 755. Hereinafter, the module cooling duct 755 may also be referred to as a first cooling duct 755.

The second blowing housing 750b may be provided to connect the second duct 72 and the module controller 86. The second blowing housing 750b may be connected to the module controller 86 through a second cooling duct 757.

The second blower housing 750b may be connected to at least one of the module cooling duct 755 and the module controller 86. That is, the second blower housing 750b may cool at least one of the module cooling duct 755 and the module controller 86.

The third blower housing 750c may be provided to accommodate the blower motor 753. The third blower housing 750c may be provided to guide air introduced from the second duct 72 into the induction module 8.

That is, the second blower housing 750b and the third blower housing 750c may be provided to communicate with each other. According to this embodiment, the third blower housing 750c and the first blower housing 750a may also be provided to communicate with each other.

The first impeller 751 may be provided as a rotating body that rotates so that air may flow in the circulation path C1.

In detail, the first impeller 751 may be rotated by the blower motor 753 and air in the first duct 71 may blow into the second duct 72. That is, air in the tub 2 may be introduced into the first duct 71 by the rotation of the first impeller 751, and air passing through the first duct 71 may be introduced through the first impeller 751 into the second duct.

That is, the first blower housing 750a may be provided between the first duct 71 and the second duct 72 to connect the first duct 71 and the second duct 72.

That is, the circulation path C1 may include the tub 2, the first duct 71, the first blower housing 750a, and the second duct. That is, after air in the tub 2 is discharged through the first duct 71 and flows through the first blower housing 750a into the second duct 72, the air may be subjected to heat exchange in the second duct 72 to remove condensate and then be put back into the tub 2.

The second impeller 752 may be provided to blow air through the cooling path C2 and thereby cool the induction module 8.

In detail, the second impeller 752 may be accommodated in the second blower housing 750b. The second blower housing 750b may be connected to the second duct 72. That is, the second impeller 752 may be accommodated in the second blower housing 750b to blow air between the second duct 72 and the induction module 8 and thereby cool the induction module 8.

One side of the second blower housing 750b may communicate with the second duct 72 to blow cool air rising from the lower end of the second duct 72 to the induction module 8. That is, at least one discharge port may be formed in the second blower housing 750b. When two discharge ports are formed in the second blower housing 750b, the induction module 8 and the module controller 86 for controlling the induction module 8 may be cooled. When three or more discharge ports are formed in the second blower housing 750b, cool air may be blown into the induction module 8 and the module controller 86 as well as components requiring separate cooling.

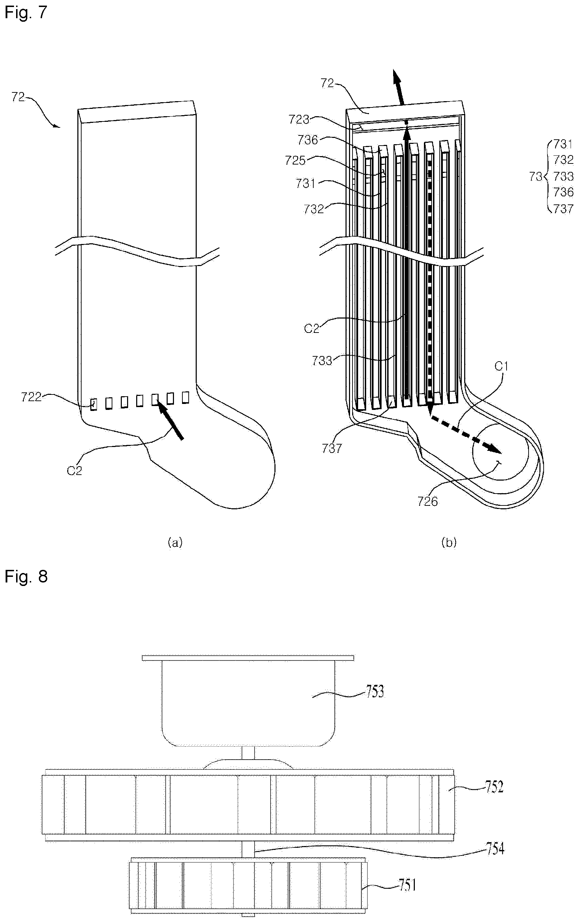

FIG. 7 is a diagram illustrating the chamber shown in FIG. 6, in which FIG. 7(a) is rear view of the chamber 72 and FIG. 7(b) is a sectional view of the chamber 72.

Referring to FIGS. 6 and 7, the circulation path C1 and the cooling path C2 may be provided in the chamber 72. Hereinafter, the circulation path C1 may also be referred to as the first flow path C1, and the cooling path C2 may also be referred to as the second flow path C2.

The chamber 72 includes a first inlet 725 communicating with the outlet of the first duct 71, and a first outlet 726 communicating with the inner space of the tub 2 (or the drum 3). The chamber 72 includes a second inlet 722 communicating with the outer space of the tub 2 (or the drum 3), and a second outlet 723 communicating with the housings 82 and 83 of the induction heater 8.

The first flow path C1 may connect the outlet of the first duct 71 and the tub 2 (or the drum 3). The first flow path C1 connects the first inlet 725 and the first outlet 726. The first inlet 725 may also be referred to as a circulation path inlet, and the first outlet 726 may also be referred to as a circulation path outlet.

The second flow path C2 may connect the outside of the tub 2 (or the drum 3) and the induction heater 8. The second flow path C2 connects the second inlet 722 and the second outlet 723. The second inlet 722 may also be referred to as a cooling path inlet, and the second outlet 723 may also be referred to as a cooling path outlet.

The chamber 72 may extend in the radial direction of the tub 2 (or the drum 3). The chamber 72 may vertically extend.

The first inlet 725 may be positioned in the upper portion of the chamber 72. The first outlet 726 may be positioned in the lower portion of the chamber 72. The first outlet 726 may be positioned below the partition wall 73.

A condensate discharge path 722 may be provided in the lower portion of the chamber 72. The condensate discharge path 722 may be positioned below the first outlet 726.

The second inlet 722 may be provided in the lower portion of the chamber 72. The second outlet 723 may be provided in the upper portion of the chamber 72. The second outlet 723 may be positioned above the partition wall 73.

The chamber 72 may include a first side facing the tub 2 (or the drum 3). The chamber 72 may include a second side facing away from the tub 2 (o the drum 3).

The second inlet may be formed in the second side. The first inlet may be formed in the first side. The first outlet may be formed in the first side. The second outlet may be formed in the first side.

The partition wall 73 may be provided in the chamber 72. The partition wall 73 may be provided in the chamber 72 to partition the above-described circulation path C1 and cooling path C2 from each other.

Moreover, since a plurality of partition walls 73 may be provided in the chamber 72, air may flow between spaces in which the partition walls 73 are disposed.

The partition wall 73 partitions the first flow path C1 from the second flow path C2 in the chamber 72.

The partition wall 73 may extend in the longitudinal direction of the chamber 72.

The partition wall 73 may include a first length portion 731 extending in the longitudinal direction of the chamber 72, a first width portion 736 extending in the widthwise direction of the chamber 72 from the first length portion 731, and a second length portion 732 extending in the longitudinal direction of the chamber 72 from the first width portion 736 and facing the first length portion 731.

The partition wall 73 may include a second width portion 737 extending in the widthwise direction of the chamber 72 from the second length portion 732. The second width portion 737 may extend from a position opposite to the first width portion 731 of the second length portion 732.

The partition wall 73 may include a third length portion 733 extending in the longitudinal direction of the chamber 72 from the second width portion 737. The third length portion 733 may face the second length portion 732.

The partition wall 73 may have a shape in which the first length portion 731, the first width portion 736, the second length portion 732, and the second width portion 737 are repeated. That is, the third length portion 733 may also be referred to as the first length portion 731, and may have a repeating shape.

The first length portion 731 and the second length portion 732 may face each other. The first length portion 731 and the second length portion 732 may be spaced apart from each other in the widthwise direction of the chamber 72.

The second length portion 732 and the third length portion 733 may face each other. The second length portion 732 and the third length portion 733 may be spaced apart from each other in the widthwise direction of the chamber 72.

The first to third length portions 721, 722, and 723 may be sequentially arranged in the widthwise direction of the chamber 72.

The first inlet 725 may be positioned between the first length portion 731 and the second length portion 722. The first inlet 725 may be disposed to be adjacent to the first width portion 736. The first inlet 725 may be formed on the first side of the chamber 72.

The second inlet 722 may be positioned between the second length portion 732 and the third length portion 733. The second inlet 722 may be disposed to be adjacent to the second width portion 737. The second inlet 722 may be formed on the second side of the chamber 72.

Further, although the above-described first blower housing 750a, second blower housing 750b, and third blower housing 750c are shown as separate housings, the present disclosure is not limited thereto.

That is, the first blower housing 750a, the second blower housing 750b, and the third blower housing 750c may be integrally formed. However, in order to separate the circulation path C1 from the cooling path C2, the first blower housing 750a and the second blower housing 750b are preferably provided to be separated from each other.

Referring to the air flow again, wet air in the tub 2 may be guided to the first duct 71 by the blower 75. The wet air guided to the first duct 71 by the rotation of the blower 75, specifically the first impeller 751 passes through the first blower housing 750a and then is introduced through the inlet 725 of the circulation path C1 into the chamber 72. The air introduced into the chamber 72 may flow along the circulation path C1 between the partition walls 73. The air flowing along the circulation path C1 may be introduced through the outlet 726 of the circulation path C1 into the tub 2.

If the second impeller 752 rotates, cool air outside the tub 2 may be introduced through the inlet 722 of the cooling path C2 into the chamber 72. The cool air introduced into the chamber 72 may flow between the partition walls 73 in the second duct 72. The air flowing between the partition walls 73 is introduced through the outlet 723 of the cooling path C2 into the blower 75.

The circulation path C1 and the cooling path C2 are partitioned by the partition wall, wet air flows downward along the circulation path C1, and cool air flows upward along the cooling path C2. The wet air and the cool air exchange heat with each other through the partition wall 73. The wet air may be cooled while flowing along the circulation path C1, thus forming condensate. The condensate may be moved to the lower side of the chamber 72 by gravity.

The condensate may be discharged to the outside of the tub 2 or the clothing management apparatus through the condensate discharge path 722.

That is, the condensate may be discharged through the above-described drain pipe 522. The condensate flowing to the lower end of the second duct 72 may be discharged through a separate condensate discharge path 722 and the inside of the tub 2 to the drain pipe, or may be directly discharged to the drain pipe.

For effective heat exchange, the partition wall 73 may be provided to have a thickness smaller than that of the second duct 72. The reason is because the heat exchange efficiency may be reduced as the thickness of the partition wall 73 is increased.

FIG. 8 is a diagram illustrating the interior of the blower of the clothing management apparatus according to the embodiment.

According to this embodiment, the first impeller 751 and the second impeller 752 may be rotated by one blower motor 753.

As shown in FIG. 8, the blower 75 may include the first impeller 751, the second impeller 752, the blower motor 753, and the blower rotating shaft 754.

The first impeller 751 and the second impeller 752 may be provided to be rotated by one blower motor 753. The first impeller 751 and the second impeller 752 may be connected to the blower rotating shaft 754 connected to the blower motor 753.

The blower rotating shaft 754 may be rotated by the blower motor 753 to provide a driving force to the first impeller 751 and the second impeller 752.

As described above, in the circulation path C1, air may flow through the front side of the tub 2, the first duct 71, the blower 75, and the second duct 72. In the cooling path C2, air may flow through the rear side of the tub 2, the second duct 72, the blower 75, and the induction module 8.

The above-described air flow path does not exclude the presence of a separate component between respective components. Likewise, it should be noted that air may be branched and introduced into a separate component.

In the circulation path C1, air may be guided form the front to the rear in the longitudinal direction of the tub 2. In the cooling path C2, air may be guided form the rear to the front in the longitudinal direction of the tub 2.

The air passing through the circulation path C1 and the cooling path C2 is guided by the blower 75. However, the blower 75 may blow air in the circulation path C1 and the cooling path C2 through one blower motor 753. Therefore, the moving direction of air in the circulation path C1 may be different from that of air in the cooling path C2.

The first impeller 751 and the second impeller 752 are rotated by one blower motor 753. In order to change the air flow path, the shapes of the first impeller 751 and the second impeller 752 may be different from each other.

However, the shapes of the first impeller 751 and the second impeller 752 do not always have to be different from each other. That is, if the first impeller 751 and the second impeller 752 are formed to have the same shape but a separate component is provided to rotate the impellers in a direction different from that in which the blower motor 753 provides a driving force, air may be smoothly guided in both the circulation path C1 and the cooling path C2.

FIG. 9 is a diagram illustrating the blower of the clothing management apparatus according to the embodiment in a side view and a plan view. FIG. 9(a) is a side view of the blower, and FIG. 9(b) is a plan view of the blower.

The structure of the blower will be described with reference to FIGS. 9(a) and 9(b).

According to this embodiment, the first duct 71 may be provided to communicate with the first blower housing 750a. The second duct 72 may communicate with the first blower housing 750a forming the circulation path C1 and the second blower housing 750b forming the cooling path C2.

To be more specific, this may communicate with the third blower housing 750c accommodating the blower motor 753, and the third blower housing 750c may communicate with the second blower housing 750b, so that air guided to the third blower housing 750c may be guided to the second blower housing 750b.

The second duct 72 may communicate with the first blower housing 750a and the third blower housing 750c at different positions.

For example, as shown in the drawing, a portion at which the second duct 72 is connected to the first blower housing 750a may be positioned at a relatively lower portion than a portion at which the second duct 72 is connected to the third blower housing 750c.

As described above, the first impeller 751 and the second impeller 752 may be provided to rotate about the same axis.

Thus, the first impeller 751 and the second impeller 752 may be rotated by one blower motor 753.

In order to rotate the first impeller 751 and the second impeller 752 about one rotating axis, the first impeller 751 and the second impeller 752 may be positioned at different heights in the height direction of the cabinet 1.

Of course, if the blower 75 is provided to be perpendicular to the height direction of the cabinet 1 unlike the drawing, the first impeller 751 and the second impeller 752 may be positioned at the same height, but the lengths of the first duct 71 and the second duct 72 increase, so that a large dead space may occur in the cabinet 1. However, when the size of the cabinet 1 is secured as desired, it may be sufficiently changed. Hereinafter, it will be described with reference to the drawing for the clear understanding of the invention. It is apparent to those skilled in the art that changes may be easily made in the embodiment.

That is, the first impeller 751 and the second impeller 752 may be provided at different heights to rotate about the same axis. Therefore, the first duct 71, the first blower housing 750a, the second blower housing 750b, and the third blower housing 750c may have a structure in which they are sequentially stacked from a bottom in the height direction of the cabinet.

The second blower housing 750b may be provided to blow air to the module cooling duct 755 for cooling the induction module 8. Further, the second blower housing 750b may be provided to blow air toward the module controller 86 for controlling the operation of the induction module 8.

The module controller 86 may be positioned adjacent to the induction module 8. However, as long as the module controller may be electrically connected to the induction module 8, the module controller may be spaced apart from the induction module.

Therefore, the second blower housing 750b may be provided to communicate with the module controller 86 at a position different from a portion communicating with the module cooling duct 755.

Thus, air introduced through the second duct 72 to the second blower housing 750b may be branched and blown to the induction module 8 and the module controller 86.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A clothing management apparatus comprising:
a cabinet;
a drum rotatably provided in the cabinet;
an induction heater heating the drum, wherein the induction heater includes a coil, and a housing accommodating the coil and fixed inside the cabinet from the outside of the drum;
a first duct provided outside the drum and having an inlet communicating with an inner space of the drum;
a chamber provided outside the drum, and including a first inlet communicating with an outlet of the first duct, a first outlet communicating with the inner space of the drum, a first flow path connecting the first inlet and the first outlet, a second inlet communicating with an outer space of the drum, a second outlet communicating with the housing of the induction heater, and a second flow path connecting the second inlet and the second outlet;
a partition wall provided in the chamber and dividing the first flow path and the second flow path;
a first impeller provided in a flow path communicating with the first flow path; and
a second impeller provided in a flow path communicating with the second flow path.

2. The clothing management apparatus of claim 1, further comprising:
a tub provided in the cabinet and accommodating the drum,
wherein the drum comprises a cylindrical body and a hole formed in the body.

3. The clothing management apparatus of claim 1, wherein the drum has an elongated cylinder shape, and
the chamber extends in a radial direction of the drum.

4. The clothing management apparatus of claim 3, wherein the partition wall extends in a longitudinal direction of the chamber.

5. The clothing management apparatus of claim 3, wherein the partition wall comprises:
a first length portion extending in a longitudinal direction of the chamber;
a first width portion extending in a widthwise direction of the chamber from the first length portion;
a second length portion extending in the longitudinal direction of the chamber from the first width portion, and facing the first length portion;
a second width portion extending in the widthwise direction of the chamber at a position opposite to the first width portion of the second length portion, and spaced apart from the first width portion in the widthwise direction of the chamber; and
a third length portion extending in the longitudinal direction of the chamber from the second width portion, and facing the second length portion.

6. The clothing management apparatus of claim 5, wherein the first inlet is disposed adjacent to the first width portion between the first length portion and the second length portion, and
the second inlet is disposed adjacent to the second width portion between the second length portion and the third length portion.

7. The clothing management apparatus of claim 3, wherein the chamber comprises:
a first side facing the drum; and
a second side facing away from the drum,
wherein the second inlet is disposed on the second side.

8. The clothing management apparatus of claim 3, wherein the drum is opened forward, and the chamber is positioned at a rear of the drum.

9. The clothing management apparatus of claim 3, wherein the first duct extends in the longitudinal direction of the drum.

10. The clothing management apparatus of claim 1, wherein the induction heater is positioned within a length of the drum on the outside of the drum, and
the first duct and the induction heater are arranged in a circumferential direction of the drum.
